# EUROPÄISCHE PATENTANMELDUNG

(11) **EP 3 034 895 A1**
(43) Veröffentlichungstag der Anmeldung: **22.06.2016**
(21) Anmeldenummer: 14198498.9
(22) Anmeldetag: 17.12.2014
(51) Int. Cl.: F16B 25/00, F16B 25/10, F16B 35/04, F16B 35/06

(54) **Schraube und Konstruktion**

(71) Anmelder: HILTI Aktiengesellschaft, 9494 Schaan (LI)
(72) Erfinder: Baudy, Daniel, 80335 München (DE); Kistler, Thomas, 9016 St. Gallen (CH)
(74) Vertreter: Hilti Aktiengesellschaft Corporate Intellectual Property

(57) **Zusammenfassung**

Schraube, umfassend einen Antrieb, eine in einer Setzrichtung von dem Antrieb beabstandete Bohrspitze zur Erzeugung eines Bohrlochs mit einer Bohrlochachse und einem Bohrlochdurchmesser, und einen sich von dem Antrieb zu der Bohrspitze erstreckenden Schaft, wobei der Schaft einen Anschlag aufweist, welcher durch das Bohrloch durchführbar ist, wenn die Setzrichtung der Schraube gegenüber der Bohrlochachse gekippt ist, und welcher eine Anschlagfläche für eine Blockierung der Durchführung des Anschlags durch das Bohrloch, wenn die Setzrichtung der Schraube parallel zur Bohrlochachse ausgerichtet ist, aufweist.

## Beschreibung

Die vorliegende Erfindung betrifft eine Schraube sowie eine Konstruktion, beispielsweise zur Isolierung einer Gebäudewand oder eines Gebäudedaches.

Eine derartige Schraube ist aus der EP 1 034 379 B1 bekannt, welche einen Kopf, zwei Schaftabschnitte mit Gewindebereichen verschiedenen Durchmessers aufweist, wobei ein als Anschlag wirkender Übergang zwischen den zwei Schaftabschnitten vorgesehen ist, welcher auf einem dünnwandigen Unterbau als Abstandhalter zur Anlage kommt. Zur Abstandsbefestigung dünnwandiger Teile an dem dünnwandigen Unterbau schliesst sich an die Unterseite des Kopfes und an den Übergang zwischen den zwei Schaftabschnitten jeweils ein gewindefreier Bereich an, dessen axiale Länge auf die Dicke des zu befestigenden Teiles beziehungsweise auf die Dicke des Unterbaus abgestimmt ist. Diese Massnahmen sollen auch bei dünnwandigen Elementen eine Abstandsbefestigung ermöglichen.

Der Erfindung liegt die Aufgabe zu Grunde, eine Schraube sowie eine Konstruktion zur Verfügung zu stellen, mit denen eine Abstandsbefestigung von dünnwandigen Teilen an einem dünnwandigen Unterbau auf alternative Weise ermöglicht ist.

Die Aufgabe wird bei einer Schraube, umfassend einen sich in der Setzrichtung von einem Schaftanfang bis zu einem Schaftende erstreckenden Schaft, einen an dem Schaftanfang angeordneten Antrieb, einen an dem Schaft angeordneten Anschlag zur Begrenzung einer Setzbewegung der Schraube in den plattenförmigen Gegenstand, ein an dem Schaft zwischen dem Anschlag und dem Schaftende angeordnetes und sich in der Setzrichtung von einem Gewindeanfang bis zu einem Gewindeende erstreckendes erstes Gewinde, wobei der Schaft einen sich in der Setzrichtung von dem Anschlag bis zu dem Gewindeanfang erstreckenden Abstandsabschnitt aufweist, durch ein in dem Abstandsabschnitt an dem Schaft angeordnetes zweites Gewinde gelöst, wobei ein Aussendurchmesser des zweiten Gewindes kleiner als ein Aussendurchmesser des ersten Gewindes und grösser als ein Kerndurchmesser des ersten Gewindes ist. Bevorzugt erstreckt sich das zweite Gewinde entgegen der Setzrichtung bis zu dem Anschlag und/oder in der Setzrichtung bis zum Gewindeanfang des ersten Gewindes.

Unter einem Aussendurchmesser eines Gewindes ist im Sinne der Erfindung der maximale äussere Durchmesser des Gewindes zu verstehen. Insbesondere ein äusserer Durchmesser des Gewindes im Bereich eines Gewindeeinlaufs oder -auslaufs ist darunter nicht zu verstehen. Ebenso ist ein Gewindeeinlauf oder -auslauf des ersten Gewindes nicht als zweites Gewinde im Sinne der Erfindung zu verstehen. Bevorzugt weist das zweite Gewinde seinen Aussendurchmesser über mindestens einen vollständigen Umlauf um den Schaft auf. Ebenfalls bevorzugt weist das zweite Gewinde seinen Aussendurchmesser über mindestens eine axiale Länge auf, die einer Dicke des plattenförmigen Gegenstands entspricht.

Eine vorteilhafte Ausführungsform ist dadurch gekennzeichnet, dass eine Steigung des zweiten Gewindes so gross ist wie eine Steigung des ersten Gewindes.

Eine vorteilhafte Ausführungsform ist dadurch gekennzeichnet, dass das zweite Gewinde als Flachgewinde ausgebildet ist. Eine weitere vorteilhafte Ausführungsform ist dadurch gekennzeichnet, dass das zweite Gewinde als Trapezgewinde ausgebildet ist. Bevorzugt ist ein Flankenwinkel des Trapezgewindes gleich wie ein Flankenwinkel des ersten Gewindes. Eine weitere vorteilhafte Ausführungsform ist dadurch gekennzeichnet, dass das zweite Gewinde als Spitzgewinde mit einem Flankenwinkel, der grösser ist als ein Flankenwinkel des ersten Gewindes, ausgebildet ist.

Bevorzugt umfasst die Schraube eine an dem Schaftende angeordnete Bohrspitze zur Erzeugung eines Bohrlochs mit einem Bohrlochdurchmesser. Bei einer Ausführungsform weist die Bohrspitze einen Durchmesser auf, der dem Bohrlochdurchmesser entspricht. Bei einer weiteren Ausführungsform weist das erste Gewinde einen maximalen Kerndurchmesser auf, der dem Bohrlochdurchmesser entspricht. Dabei ist der Gewindekern des ersten Gewindes unter Umständen geeignet, das Bohrloch aufzuweiten. Besonders bevorzugt weist der Anschlag und oder das erste Gewinde eine oder mehrere Schneidkanten zum Aufweiten des Bohrlochs auf. Ebenfalls bevorzugt ist eine Differenz zwischen dem Aussendurchmesser des zweiten Gewindes und dem Bohrlochdurchmesser kleiner als 50%, besonders bevorzugt kleiner als 25% oder kleiner als 15%, einer Differenz zwischen dem Aussendurchmesser des ersten Gewindes und dem Bohrlochdurchmesser.

Eine weitere vorteilhafte Ausführungsform ist dadurch gekennzeichnet, dass der Schaft einen den Anschlag aufweisenden Knick und/oder Bogen aufweist. Bevorzugt ist der Knick und/oder der Bogen durch ein Bohrloch durchführbar, wenn die Setzrichtung der Schraube gegenüber der Bohrlochachse gekippt ist, und weist eine Anschlagfläche für eine Blockierung der Durchführung des Anschlags durch das Bohrloch auf, wenn die Setzrichtung der Schraube parallel zur Bohrlochachse ausgerichtet ist.

Bevorzugt umfasst die Schraube einen Schraubenkopf, welcher den Antrieb und den Anschlag aufweist.

Bei einer vorteilhaften Ausführungsform umfasst die Schraube einen zwischen dem Schaftanfang und dem Anschlag oder zwischen dem Gewindeende und dem Schaftende an dem Schaft angeordneten weiteren Anschlag zur Begrenzung einer Setzbewegung der Schraube in einen weiteren plattenförmigen Gegenstand und ein zwischen dem weiteren Anschlag und dem Anschlag angeordnetes und sich in der Setzrichtung von einem weiteren Gewindeanfang bis zu einem weiteren Gewindeende erstreckendes weiteres erstes Gewinde. Bevorzugt weist der Schaft einen sich in der Setzrichtung von dem weiteren Anschlag bis zu dem weiteren Gewindeanfang erstreckenden weiteren Abstandsabschnitt auf. Besonders bevorzugt umfasst die Schraube ein in dem weiteren Abstandsabschnitt an dem Schaft angeordnetes weiteres zweites Gewinde, wobei ein Aussendurchmesser des weiteren zweiten Gewindes kleiner als ein Aussendurchmesser des weiteren ersten Gewindes und grösser als ein Kerndurchmesser des weiteren ersten Gewindes ist. Das weitere erste Gewinde weist vorteilhaft einen grösseren Aussendurchmesser auf als das erste Gewinde. Ebenso vorteilhaft weist das weitere erste Gewinde einen kleineren Aussendurchmesser auf als das erste Gewinde.

Die Aufgabe wird ebenfalls gelöst bei einer Konstruktion, aufweisend einen oder mehrere plattenförmige Gegenstände mit einer Gesamtdicke, und eine in den plattenförmigen Gegenstand gesetzte Schraube, wobei die Schraube nach einem der vorhergehenden Ansprüche ausgebildet ist, wobei der Abstandsabschnitt entlang der Setzrichtung eine Länge hat, die im Wesentlichen der Gesamtdicke entspricht, und wobei der oder die plattenförmigen Gegenstände an dem Abstandsabschnitt und insgesamt an dem Anschlag anliegen.

Gemäss einer vorteilhaften Weiterbildung weist die Konstruktion, die beispielsweise eine Gebäudehülle ist, weiterhin einen von der Grundplatte abragenden Kassettensteg auf, an dem die Schraube befestigt ist. Die Grundplatte bildet dann zusammen mit dem Kassettensteg eine Kassette. Bevorzugt umfasst ein Material der Grundplatte, des Kassettenstegs und/oder der Deckplatte ein Metall oder eine Legierung.

Die Erfindung wird im Folgenden unter Bezugnahme auf die Zeichnungen näher erläutert. Es zeigen:
- Fig. 1: einen Ausschnitt einer Gebäudehülle in einem Querschnitt während einer Befestigung,
- Fig. 2: den Ausschnitt der Gebäudehülle nach der Befestigung,
- Fig. 3: eine Schraube in einer Seitenansicht,
- Fig. 4: eine Schraube in einer Seitenansicht,
- Fig. 5: eine Schraube in einer Teilansicht und
- Fig. 6: eine Schraube in einer Teilansicht.

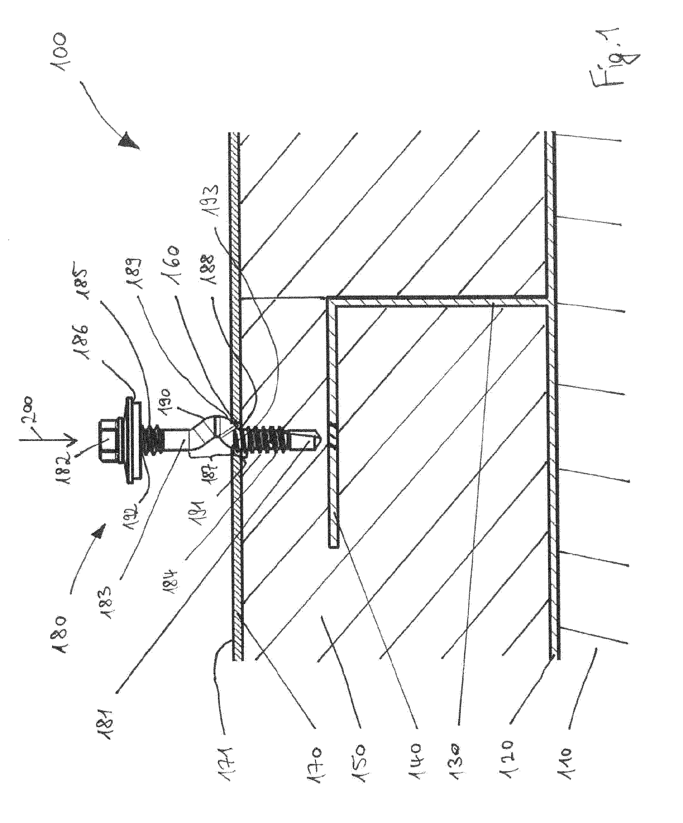

In Fig. 1 ist eine Gebäudehülle 100 im Querschnitt dargestellt, mit an eine Wand 110 geschraubten oder genagelten Grundplatten 120, von denen jeweils zur Bildung einer Stahlkassette ein Kassettensteg 130 abragt. Die Kassettenstege 130 weisen jeweils einen rechtwinklig abgewinkelten Befestigungsbereich 140 auf. In die Kassetten ist jeweils ein als Isolierplatte 150 ausgebildetes Isolierelement eingelegt. Gegenüber der Umgebung ist das Isolierelement 150 mit einer Deckplatte 170 abgedeckt, welche mittels einer Schraube 180 über den Kassettensteg 130 an der Grundplatte 120 befestigt wird. Die Deckplatte 170 ist als Stahlblech ausgebildet. Bei nicht gezeigten Ausführungsbeispielen ist die Deckplatte aus Kunststoff gefertigt und/oder ist als Folie ausgebildet. Die Isolierplatte 150 weist ein kompressibles Isolationsmaterial auf, beispielsweise Mineralwolle wie Steinwolle oder Glaswolle.

Die Schraube 180 weist einen als Schraubenkopf 182 ausgebildeten Antrieb sowie eine von dem Schraubenkopf 182 in einer Setzrichtung 200 beabstandete Bohrspitze 181 zum Bohren eines ersten Bohrloches 160 in die Deckplatte 170 sowie eines zweiten Bohrloches in den Befestigungsbereich 140 auf. Zwischen der Bohrspitze 181 und dem Schraubenkopf 182 der Schraube 180 erstreckt sich ein Schaft 183, welcher in einem ersten Gewindeabschnitt ein sich an die Bohrspitze 181 anschliessendes, selbstschneidendes erstes Gewinde 184 und in einem weiteren Gewindeabschnitt ein weiteres erstes Gewinde 185 trägt. Das weitere erste Gewinde 185 weist dabei einen grösseren Durchmesser auf als das erste Gewinde 184. Unterhalb des Kopfes 182 ist eine Dichtscheibenanordnung 186 mit einer Dichtscheibe und einer Abdeckscheibe auf den Schraubenschaft 183 aufgezogen. Bei einem nicht gezeigten Ausführungsbeispiel weist das weitere erste Gewinde einen kleineren Durchmesser auf als das erste Gewinde. Bei einem weiteren nicht gezeigten Ausführungsbeispiel weisen das erste und das weitere erste Gewinde gleich grosse Durchmesser auf.

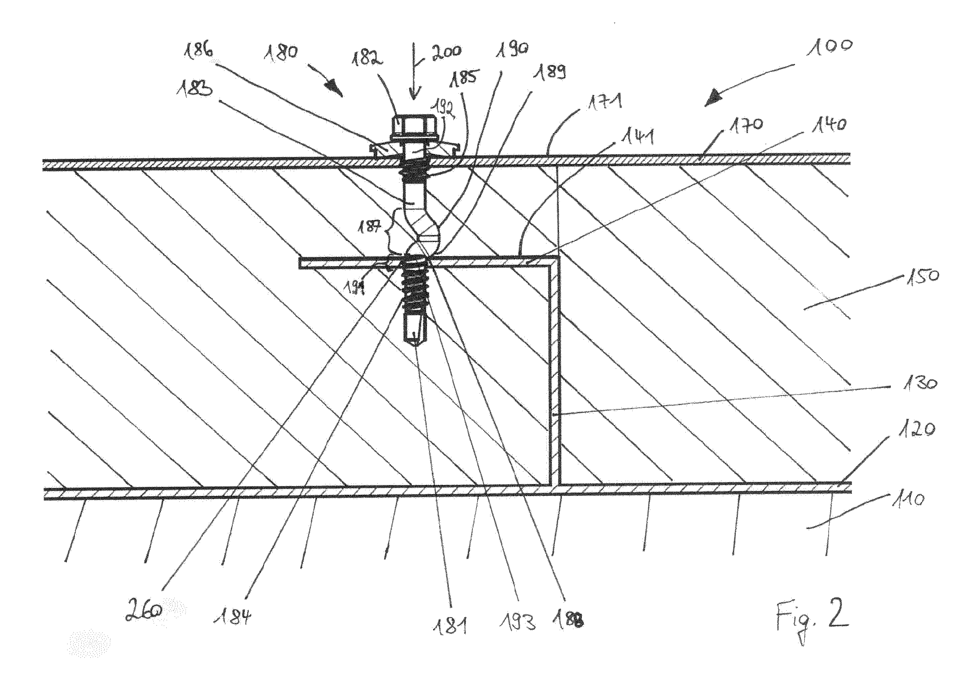

Der Schraubenschaft 183 umfasst einen Anschlag 187 mit einem Knick 188 des Schafts 183, einer Anschlagfläche 189 sowie einem Bogen 190 des Schafts 183. Die Anschlagfläche 189 wird dabei aufgrund des Knicks 188 durch eine Umfangsfläche des Schafts 183 gebildet und blockiert in der in Fig. 1 gezeigten Stellung eine Durchführung des Anschlags 187 durch das erste Bohrloch 160. Der Schaft 183 hat überall, insbesondere im Bereich des Anschlags, einen kreisförmigen Querschnitt. Der Schaft 183 weist zwischen der Anschlagfläche 189 und dem ersten Gewinde 184 einen Abstandsabschnitt 191 und zwischen der Dichtscheibenanordnung 186 und dem weiteren ersten Gewinde 185 einen weiteren Abstandsabschnitt 192 auf. In dem Abstandsabschnitt 191 ist an dem Schaft 183 ein zweites Gewinde 193 angeordnet, dessen Aussendurchmesser kleiner als ein Aussendurchmesser des ersten Gewindes 184 und grösser als ein Kerndurchmesser des ersten Gewindes 184 ist. Der weitere Abstandsabschnitt 192 ist dagegen gewindefrei. Entlang der Setzrichtung 200 hat der Abstandsabschnitt 191 eine Länge, die einer Gesamtdicke des Kassettenstegs 130 im Befestigungsbereich 140 entspricht, so dass nach einem Setzen der Schraube 180 in den Kassettensteg 130 der Kassettensteg 130 an dem Abstandsabschnitt 191 anliegt und in der Setzrichtung 200 zwischen dem ersten Gewinde 184 und dem Anschlag 187 eingeklemmt ist (Fig. 2).

Zur Isolierung der Gebäudehülle 100 wird zunächst die Grundplatte 120 an der Wand 110 befestigt. Anschliessend wird das Isolierelement 150 an die Grundplatte 120 angelegt sowie die Deckplatte 170 auf das Isolierelement 150 aufgelegt und mittels der Schraube 180 an der Grundplatte befestigt. Dabei wird zunächst mit der Bohrspitze 181 in der Deckplatte 170 das erste Bohrloch 160 gebohrt, so dass das erste Bohrloch 160 eine zur Oberfläche 171 der Deckplatte 170 senkrechte Bohrlochachse aufweist. Der Bohrlochdurchmesser des ersten Bohrlochs 160 ist dann so gross wie der Aussendurchmesser der Bohrspitze 181. Anschliessend wird die Schraube 180 mittels des ersten Gewindes 184, das einen grösseren Aussendurchmesser als die Bohrspitze 181 und demzufolge das erste Bohrloch 160 aufweist, so weit durch das erste Bohrloch geschraubt, bis die Anschlagfläche 189 an der Oberfläche 171 der Deckplatte 170 anliegt. Die in Fig. 1 gezeigte Stellung ist dann erreicht. Eine Durchführung des Anschlags 187 durch das erste Bohrloch 160 ist durch die Anschlagfläche 189 blockiert, solange die Setzrichtung 200 der Schraube 180 parallel zur Bohrlochachse des ersten Bohrlochs 160, also senkrecht zur Oberfläche 171 der Deckplatte 170, ausgerichtet ist.

Um den Anschlag 187 durch das erste Bohrloch 160 zu befördern, wird die Schraube 180 anschliessend gekippt. In Fig. 1 ist dabei der Schraubenkopf 182 nach links zu kippen. Da der Durchmesser des Schafts 183 im Bereich des Anschlags 187 den Bohrlochdurchmesser des ersten Bohrlochs 160 nicht übersteigt, lässt sich die Schraube 180 dann durch das erste Bohrloch 160 weiter durchstecken. Schliesslich wird die Schraube 180 zurückgekippt, bis ihre Setzrichtung 200 wieder senkrecht zur Oberfläche 171 der Deckplatte 170 ausgerichtet ist, und so weit durch das erste Bohrloch 160 gesteckt, bis die Bohrspitze 181 an dem Befestigungsbereich 140 der Grundplatte 120 anliegt. Das Kippen der Schraube 180 wird auch dadurch ermöglicht, dass der Abstand der Deckplatte 170 von dem Befestigungsbereich 140 grösser ist als der Abstand zwischen dem eintreibseitigen Ende der Bohrspitze 181 und der Anschlagfläche 189 der Schraube 180, sowie dadurch, dass die Isolierplatte 150 einer derartigen Bewegung der Schraube 180 nachgibt.

Dann wird in dem Befestigungsbereich 140 mittels der Bohrspitze 181 ein zweites Bohrloch 260 gebohrt, so dass auch das zweite Bohrloch 260 eine zur Oberfläche 171 der Deckplatte 170 senkrechte Bohrlochachse aufweist. Der Bohrlochdurchmesser des zweiten Bohrlochs 160 ist dann ebenfalls so gross wie der Aussendurchmesser der Bohrspitze 181. Anschliessend wird die Schraube 180 mittels des ersten Gewindes 184, so weit durch das zweite Bohrloch geschraubt, bis die Anschlagfläche 189 an der Oberfläche 141 des Befestigungsbereichs 140 anliegt. Die in Fig. 2 gezeigte Stellung ist dann erreicht. Eine Durchführung des Anschlags 187 durch das zweite Bohrloch 260 ist durch die Anschlagfläche 189 blockiert, da die Setzrichtung 200 der Schraube 180 parallel zur Bohrlochachse des zweiten Bohrlochs 160, also senkrecht zur Oberfläche 141 des Befestigungsbereichs 140, ausgerichtet ist. Ein Kippen der Schraube 180 ist nicht mehr möglich, da die Schraube 180 sowohl im ersten Bohrloch 160 als auch im zweiten Bohrloch 260 gehalten ist. Um die Schraube 180 dennoch weiterzudrehen, muss das zweite Gewinde 193 derart verformt werden, dass es sich in dem zweiten Bohrloch 260 ohne Bewegung der Schraube 180 in der Setzrichtung 200 durchdrehen lässt. Aufgrund der Verformung steigt der Widerstand gegen das Weiterdrehen der Schraube 180 an, so dass die Person, die die Schraube 180 an der Grundplatte 120 befestigt, bemerkt, dass der Befestigungsvorgang beendet ist. Da ein Aussendurchmesser des zweiten Gewindes 193 kleiner als ein Aussendurchmesser des ersten Gewindes 184 ist, lässt sich das zweite Gewinde 193 verformen, so dass sich die Schraube 180 so lange in dem zweiten Bohrloch 260 weiterdrehen lässt, bis der Kopf 182 zur Abdichtung des Bohrloches 160 in der Deckplatte 170 die Dichtscheibenanordnung 186 gegen die Deckplatte 170 presst. Das zweite Gewinde 193 bleibt, gegebenenfalls auch nach einer solchen Verformung, mit dem zweiten Bohrloch 260 in Eingriff, so dass sich die Schraube 180 vorteilhafterweise wieder aus der Gebäudehülle 100 herausschrauben lässt, falls dies gewünscht ist.

Ausserdem ist die Deckplatte 170 nur über die Isolationsplatte 150 und die Schraube 180 mit der Grundplatte 120 verbunden. Der Abstand zwischen der Grundplatte 120 und der Deckplatte 170 wird alleine durch die Schraube 180 bestimmt und entspricht, auf den Befestigungsbereich 140 bezogen, dem Abstand zwischen dem Schraubenkopf 182 und der Anschlagfläche 189, gegebenenfalls reduziert um die Dicke der Dichtscheibenanordnung 186, jeweils in Setzrichtung gesehen.

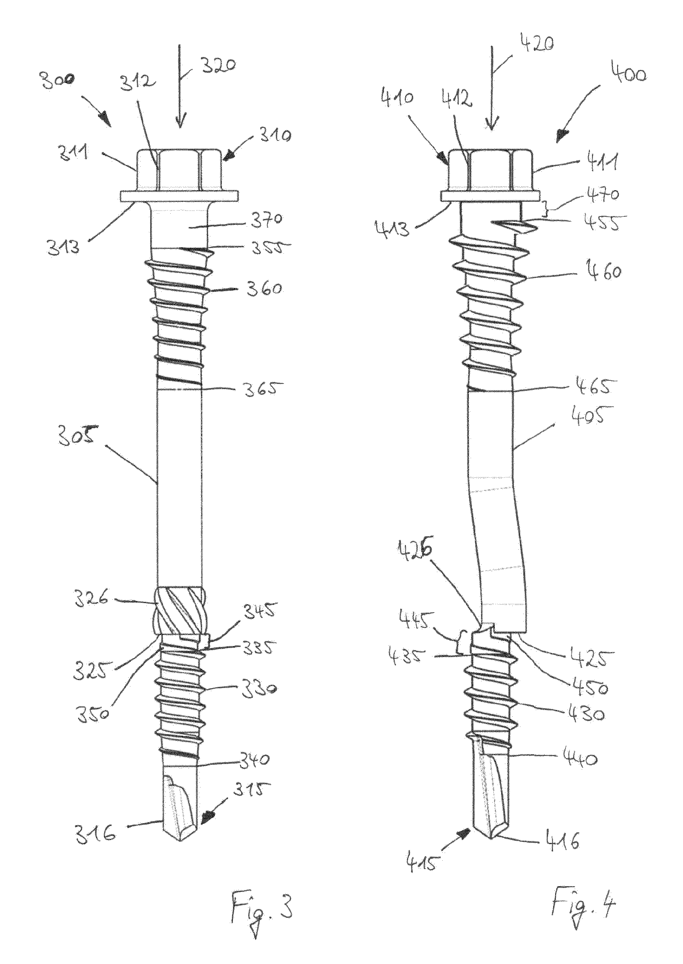

In Fig. 3 ist eine Schraube 300 in einer Seitenansicht dargestellt. Die Schraube 300 hat einen Schaft 305, welcher sich in einer Setzrichtung 320 von einem Schaftanfang 310 bis zu einem Schaftende 315 erstreckt. An dem Schaftanfang 310 ist ein Schraubenkopf 311 mit einem als Aussensechskant ausgebildeten Antrieb 312 und einer Kopfunterseite 313 angeordnet. An dem Schaftende 315 ist eine Bohrspitze 316 zur Erzeugung eines Bohrlochs angeordnet. Weiterhin weist die Schraube 300 einen an dem Schaft 305 angeordneten Anschlag 325 zur Begrenzung einer Setzbewegung der Schraube 300 in einen beispielsweise plattenförmigen Gegenstand auf. Der Anschlag 325 weist mehrere Schneidkanten 326 zum Aufweiten des Bohrlochs auf.

Zwischen dem Anschlag 325 und dem Schaftende 315 ist an dem Schaft 305 ein erstes Gewinde 330 angeordnet, welches sich in der Setzrichtung 320 von einem Gewindeanfang 335 bis zu einem Gewindeende 340 erstreckt. Der Schaft 305 weist einen Abstandsabschnitt 345 auf, welcher sich in der Setzrichtung 320 von dem Anschlag 325 bis zu dem Gewindeanfang 335 erstreckt. In dem Abstandsabschnitt 345 ist an dem Schaft 305 ein zweites Gewinde 350 angeordnet, welches einen Aussendurchmesser aufweist, der kleiner als ein Aussendurchmesser des ersten Gewindes 330 und grösser als ein Kerndurchmesser des ersten Gewindes 330 ist. Das zweite Gewinde 350 erstreckt sich entgegen der Setzrichtung 320 bis zu dem Anschlag 325 und in der Setzrichtung 320 bis zum Gewindeanfang 335 des ersten Gewindes 330. Die Steigung des als Flachgewinde ausgebildeten zweiten Gewindes 350 ist so gross wie die Steigung des ersten Gewindes 330. Bei nicht gezeigten Ausführungsbeispielen ist die Steigung des zweiten Gewindes grösser oder kleiner als die Steigung des ersten Gewindes.

Die Kopfunterseite 313 bildet einen zwischen dem Schaftanfang 310 und dem Anschlag 325 an dem Schaft angeordneten weiteren Anschlag zur Begrenzung einer Setzbewegung der Schraube 300 in einen weiteren plattenförmigen Gegenstand. Zwischen der Kopfunterseite 313 und dem Anschlag 325 ist ein weiteres erstes Gewinde 360 angeordnet, welches sich in der Setzrichtung 320 von einem weiteren Gewindeanfang 355 bis zu einem weiteren Gewindeende 365 erstreckt. Von der Kopfunterseite 313 bis zu dem weiteren Gewindeanfang 355 erstreckt sich in der Setzrichtung 320 ein weiterer Abstandsabschnitt 370, welcher gewindefrei ist. Wenn nun während eines Setzvorgangs der weitere Anschlag, hier die Kopfunterseite 313, an dem weiteren plattenförmigen Gegenstand zur Anlage kommt, während das erste Gewinde 330 noch im Eingriff mit dem dortigen plattenförmigen Gegenstand ist, lässt der gewindefreie weitere Abstandsabschnitt 370 eine weitere Drehung der Schraube 300 zu, so dass auch das erste Gewinde 330 so weit durch den plattenförmigen Gegenstand geschraubt werden kann, bis der Anschlag 325 an dem plattenförmigen Gegenstand zur Anlage kommt.

Wenn dagegen der Anschlag 325 an dem plattenförmigen Gegenstand zur Anlage kommt, während das weitere erste Gewinde 360 noch im Eingriff mit dem weiteren plattenförmigen Gegenstand ist, wird bei weiterer Drehung der Schraube 300 unter Umständen das von dem ersten Gewinde 330 in den plattenförmigen Gegenstand geschnittene Gewinde von dem zweiten Gewinde 350 durch Überdrehen verformt, wobei das für die Drehung der Schraube 300 zu überwindende Drehmoment ansteigt. Die Schraube 300 lässt sich daher noch weiterdrehen, bis der durch die Kopfunterseite 313 gebildete weitere Anschlag an dem weiteren plattenförmigen Gegenstand zur Anlage kommt. Da die Verformung des von dem ersten Gewinde 330 in den plattenförmigen Gegenstand geschnittenen Gewindes neben einem plastischen Anteil auch einen elastischen Anteil hat, befindet sich das zweite Gewinde 350 dann immer noch mit dem in den plattenförmigen Gegenstand geschnittenen Gewinde, so dass sich die Schraube 300 jederzeit wieder aus dem plattenförmigen Gegenstand herausschrauben lässt, falls dies gewünscht ist. Vorteilhafterweise hat daher das zweite Gewinde 350 eine Gewindesteigung, die gleich gross ist wie eine Gewindesteigung des ersten Gewindes 330.

Das weitere erste Gewinde 360 weist einen Aussendurchmesser auf, welcher entgegen der Setzrichtung 320 zunimmt und im Bereich des weiteren Gewindeendes 365 kleiner ist als der Aussendurchmesser des ersten Gewindes 330 und im Bereich des weiteren Gewindeanfangs 355 grösser ist als der Aussendurchmesser des ersten Gewindes 330. Bei nicht gezeigten Ausführungsbeispielen umfasst die Schraube ein in dem weiteren Abstandsabschnitt an dem Schaft angeordnetes weiteres zweites Gewinde, wobei ein Aussendurchmesser des weiteren zweiten Gewindes kleiner als ein Aussendurchmesser des weiteren ersten Gewindes und grösser als ein Kerndurchmesser des weiteren ersten Gewindes ist.

In Fig. 4 ist eine Schraube 400 in einer Seitenansicht dargestellt. Die Schraube 400 hat einen Schaft 405, welcher sich in einer Setzrichtung 420 von einem Schaftanfang 410 bis zu einem Schaftende 415 erstreckt. An dem Schaftanfang 410 ist ein Schraubenkopf 411 mit einem als Aussensechskant ausgebildeten Antrieb 412 und einer Kopfunterseite 413 angeordnet. An dem Schaftende 415 ist eine Bohrspitze 416 zur Erzeugung eines Bohrlochs angeordnet. Weiterhin weist die Schraube 400 einen an dem Schaft 405 angeordneten Anschlag 425 zur Begrenzung einer Setzbewegung der Schraube 400 in einen beispielsweise plattenförmigen Gegenstand auf. Zur Bildung des Anschlags 425 weist die Schraube 400 einen Knick 426 auf. Der Knick 426 ist durch ein von der Bohrspitze 416 erzeugtes Bohrloch durchführbar, wenn die Setzrichtung der Schraube gegenüber der Bohrlochachse gekippt ist. Hierzu ist der Durchmesser des Schaftes 405 im Bereich des Knickes 426 konstant. Der Anschlag 425 ist dann durch eine Anschlagfläche des Knickes 426 gebildet und sorgt für eine Blockierung der Durchführung des Anschlags 425 durch das Bohrloch, wenn die Setzrichtung 420 der Schraube 400 parallel zur Bohrlochachse ausgerichtet ist.

Zwischen dem Anschlag 425 und dem Schaftende 415 ist an dem Schaft 405 ein erstes Gewinde 430 angeordnet, welches sich in der Setzrichtung 420 von einem Gewindeanfang 435 bis zu einem Gewindeende 440 erstreckt. Der Schaft 405 weist einen Abstandsabschnitt 445 auf, welcher sich in der Setzrichtung 420 von dem Anschlag 425 bis zu dem Gewindeanfang 435 erstreckt. In dem Abstandsabschnitt 445 ist an dem Schaft 405 ein zweites Gewinde 450 angeordnet, welches einen Aussendurchmesser aufweist, der kleiner als ein Aussendurchmesser des ersten Gewindes 430 und grösser als ein Kerndurchmesser des ersten Gewindes 430 ist. Das zweite Gewinde 450 erstreckt sich entgegen der Setzrichtung 420 bis zu dem Anschlag 425 und in der Setzrichtung 420 bis zum Gewindeanfang 435 des ersten Gewindes 430. Die Steigung des als Flachgewinde ausgebildeten zweiten Gewindes 450 ist so gross wie die Steigung des ersten Gewindes 430. Bei nicht gezeigten Ausführungsbeispielen ist die Steigung des zweiten Gewindes grösser oder kleiner als die Steigung des ersten Gewindes.

Die Kopfunterseite 413 bildet einen zwischen dem Schaftanfang 410 und dem Anschlag 425 an dem Schaft angeordneten weiteren Anschlag zur Begrenzung einer Setzbewegung der Schraube 400 in einen weiteren plattenförmigen Gegenstand. Zwischen der Kopfunterseite 413 und dem Anschlag 425 ist ein weiteres erstes Gewinde 460 angeordnet, welches sich in der Setzrichtung 420 von einem weiteren Gewindeanfang 455 bis zu einem weiteren Gewindeende 465 erstreckt. Von der Kopfunterseite 413 bis zu dem weiteren Gewindeanfang 455 erstreckt sich in der Setzrichtung 420 ein weiterer Abstandsabschnitt 470, welcher gewindefrei ist. Hinsichtlich der Funktion des Abstandsabschnitts 445 und des weiteren Abstandsabschnitts 470 kann auf die obige Darstellung mit Bezug auf Fig. 3 sowie den dortigen Abstandsabschnitt 345 und weiteren Abstandsabschnitt 370 verwiesen werden.

Das weitere erste Gewinde 460 weist einen Aussendurchmesser auf, welcher entgegen der Setzrichtung 420 zunimmt und im Bereich des weiteren Gewindeendes 465 kleiner ist als der Aussendurchmesser des ersten Gewindes 430 und im Bereich des weiteren Gewindeanfangs 455 grösser ist als der Aussendurchmesser des ersten Gewindes 430. Bei nicht gezeigten Ausführungsbeispielen umfasst die Schraube ein in dem weiteren Abstandsabschnitt an dem Schaft angeordnetes weiteres zweites Gewinde, wobei ein Aussendurchmesser des weiteren zweiten Gewindes kleiner als ein Aussendurchmesser des weiteren ersten Gewindes und grösser als ein Kerndurchmesser des weiteren ersten Gewindes ist.

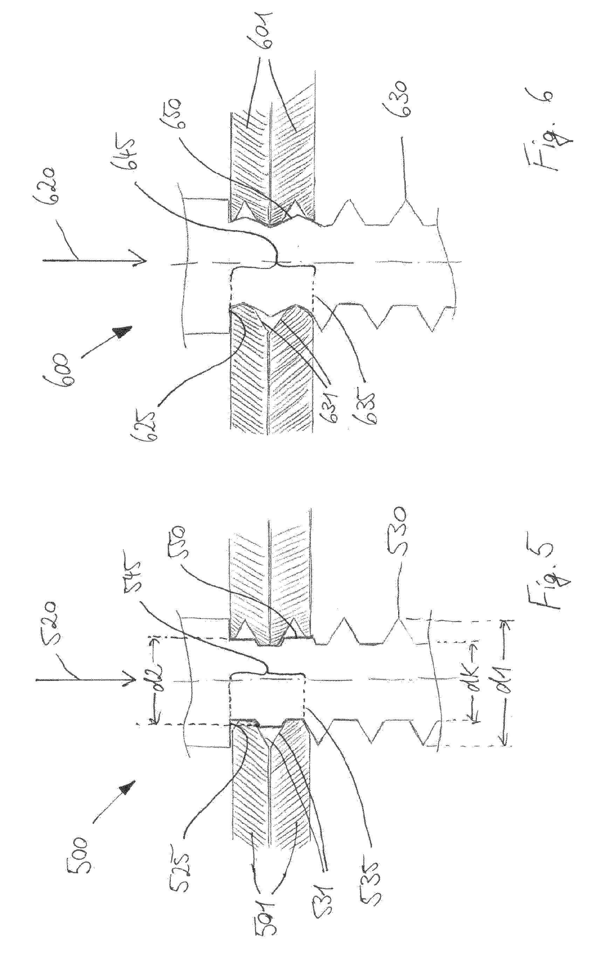

Fig. 5 zeigt eine Schraube 500, welche in einen Stapel plattenförmiger Gegenstände 501 eingeschraubt ist und zusammen mit den plattenförmigen Gegenständen 501 eine Konstruktion bildet. Die Schraube 500 hat einen Schaft 505 mit einem selbstschneidenden ersten Gewinde 530 und einem Anschlag 525. Die Schraube 500 ist in ihrem gesetzten Zustand dargestellt, so dass das erste Gewinde 530 während des Einschraubens ein Gegengewinde 531 in die plattenförmigen Gegenstände geschnitten hat und andererseits der Anschlag 525 an dem Stapel plattenförmiger Gegenstände 501 in Anlage gekommen ist.

Das erste Gewinde 530 erstreckt sich entgegen einer Setzrichtung 520 der Schraube 500 bis zu einem Gewindeanfang 535. Zwischen dem Gewindeanfang 535 und dem Anschlag 525 weist der Schaft 505 einen Abstandsabschnitt 545 mit einem zweiten Gewinde 550 auf, wobei sich das zweite Gewinde 550 in der Setzrichtung 520 von dem Anschlag 525 bis zu dem Gewindeanfang 535 erstreckt. Bei nicht gezeigten Ausführungsbeispielen ist das zweite Gewinde von dem Anschlag und/oder dem Gewindeanfang beabstandet. Der Aussendurchmesser d2 des zweiten Gewindes 550 ist kleiner als der Aussendurchmesser d1 des ersten Gewindes 530 und grösser als der Kerndurchmesser dK des ersten Gewindes 530. Die Kerndurchmesser des ersten Gewindes 530 und des zweiten Gewindes 550 sind gleich. Bei nicht gezeigten Ausführungsbeispielen ist der Kerndurchmesser des zweiten Gewindes grösser oder kleiner als der Kerndurchmesser des ersten Gewindes.

Das zweite Gewinde 550 ist als Trapezgewinde mit einem Flankenwinkel, der gleich wie ein Flankenwinkel des ersten Gewindes 530 ist, ausgebildet. Da auch die Gewindesteigungen des ersten Gewindes 530 und des zweiten Gewindes 550 gleich sind, kann das zweite Gewinde 550 ohne erhöhten Widerstand durch das Gegengewinde 531 geschraubt werden. Das zweite Gewinde 550 bleibt mit dem Gegengewinde 531 selbst nach einem Überdrehen in Eingriff, so dass die Schraube 500 auch wieder aus den plattenförmigen Gegenständen 501 herausgeschraubt werden kann. Bei einem Überdrehen verformt sich zwar das Gegengewinde 531, aufgrund des elastischen Anteils dieser Verformung bleibt das zweite Gewinde 550 jedoch mit dem Gegengewinde 531 in Eingriff.

Fig. 6 zeigt eine Schraube 600, welche in einer Setzrichtung 620 in einen Stapel plattenförmiger Gegenstände 601 eingeschraubt ist und zusammen mit den plattenförmigen Gegenständen 601 eine Konstruktion bildet. Die Schraube 600 hat einen Schaft 605 mit einem sich in der Setzrichtung 620 von einem Gewindeanfang 635 bis zu einem nicht dargestellten Gewindeende erstreckenden, selbstschneidenden ersten Gewinde 630 und einem Anschlag 625. Die Schraube 600 ist in ihrem gesetzten Zustand dargestellt, so dass das erste Gewinde 630 während des Einschraubens ein Gegengewinde 631 in die plattenförmigen Gegenstände geschnitten hat und andererseits der Anschlag 625 an dem Stapel plattenförmiger Gegenstände 601 in Anlage gekommen ist.

Weiterhin weist der Schaft 605 zwischen dem Anschlag 625 und dem Gewindeanfang 635 einen Abstandsabschnitt 645 mit einem zweiten Gewinde 650 auf. Die Schraube 600 unterscheidet sich von der in Fig. 5 gezeigten Schraube 500 insbesondere dadurch, dass das zweite Gewinde 650 als Spitzgewinde mit einem Flankenwinkel, der grösser ist als ein Flankenwinkel des ersten Gewindes 630, ausgebildet ist. Da auch die Gewindesteigungen des ersten Gewindes 630 und des zweiten Gewindes 650 gleich sind, kann das zweite Gewinde 650 ohne erhöhten Widerstand durch das Gegengewinde 631 geschraubt werden. Da auch das zweite Gewinde 650 der Schraube 600 mit dem Gegengewinde 631 selbst nach einem Überdrehen in Eingriff bleibt, kann auch die Schraube 600 wieder aus den plattenförmigen Gegenständen 601 herausgeschraubt werden.

Die Erfindung wurde anhand des Beispiels einer Gebäudeisolierung beschrieben. Es wird jedoch darauf hingewiesen, dass die erfindungsgemässe Schraube auch für andere Zwecke geeignet ist.

## Patentansprüche

1. Schraube zum Setzen in einen plattenförmigen Gegenstand in einer Setzrichtung, umfassend einen sich in der Setzrichtung von einem Schaftanfang bis zu einem Schaftende erstreckenden Schaft, einen an dem Schaftanfang angeordneten Antrieb, einen an dem Schaft angeordneten Anschlag zur Begrenzung einer Setzbewegung der Schraube in den plattenförmigen Gegenstand, ein an dem Schaft zwischen dem Anschlag und dem Schaftende angeordnetes und sich in der Setzrichtung von einem Gewindeanfang bis zu einem Gewindeende erstreckendes erstes Gewinde, wobei der Schaft einen sich in der Setzrichtung von dem Anschlag bis zu dem Gewindeanfang erstreckenden Abstandsabschnitt aufweist, und ein in dem Abstandsabschnitt an dem Schaft angeordnetes zweites Gewinde, wobei ein Aussendurchmesser des zweiten Gewindes kleiner als ein Aussendurchmesser des ersten Gewindes und grösser als ein Kerndurchmesser des ersten Gewindes ist.

2. Schraube nach Anspruch 1, wobei sich das zweite Gewinde entgegen der Setzrichtung bis zu dem Anschlag erstreckt.

3. Schraube nach einem der vorhergehenden Ansprüche, wobei sich das zweite Gewinde in der Setzrichtung bis zum Gewindeanfang des ersten Gewindes erstreckt.

4. Schraube nach einem der vorhergehenden Ansprüche, wobei eine Steigung des zweiten Gewindes so gross ist wie eine Steigung des ersten Gewindes.

5. Schraube nach einem der vorhergehenden Ansprüche, wobei das zweite Gewinde als Flachgewinde oder Trapezgewinde, insbesondere mit einem Flankenwinkel, der gleich ist wie ein Flankenwinkel des ersten Gewindes, ausgebildet ist.

6. Schraube nach einem der Ansprüche 1 bis 4, wobei das zweite Gewinde als Spitzgewinde mit einem Flankenwinkel, der grösser ist als ein Flankenwinkel des ersten Gewindes, ausgebildet ist.

7. Schraube nach einem der vorhergehenden Ansprüche, umfassend eine an dem Schaftende angeordnete Bohrspitze zur Erzeugung eines Bohrlochs mit einem Bohrlochdurchmesser, wobei insbesondere der Anschlag eine oder mehrere Schneidkanten zum Aufweiten des Bohrlochs aufweist.

8. Schraube nach einem der vorhergehenden Ansprüche, wobei der Schaft einen den Anschlag aufweisenden Knick und/oder Bogen aufweist.

9. Schraube nach einem der vorhergehenden Ansprüche, weiterhin umfassend einen Schraubenkopf, welcher den Antrieb und den Anschlag aufweist.

10. Schraube nach einem der vorhergehenden Ansprüche, weiterhin umfassend einen zwischen dem Schaftanfang und dem Anschlag oder zwischen dem Gewindeende und dem Schaftende an dem Schaft angeordneten weiteren Anschlag zur Begrenzung einer Setzbewegung der Schraube in einen weiteren plattenförmigen Gegenstand und ein zwischen dem weiteren Anschlag und dem Anschlag angeordnetes und sich in der Setzrichtung von einem weiteren Gewindeanfang bis zu einem weiteren Gewindeende erstreckendes weiteres erstes Gewinde.

11. Schraube nach Anspruch 10, wobei der Schaft einen sich in der Setzrichtung von dem weiteren Anschlag bis zu dem weiteren Gewindeanfang erstreckenden weiteren Abstandsabschnitt aufweist.

12. Schraube nach Anspruch 11, weiterhin umfassend ein in dem weiteren Abstandsabschnitt an dem Schaft angeordnetes weiteres zweites Gewinde, wobei ein Aussendurchmesser des weiteren zweiten Gewindes kleiner als ein Aussendurchmesser des weiteren ersten Gewindes und grösser als ein Kerndurchmesser des weiteren ersten Gewindes ist.

13. Schraube nach einem der Ansprüche 10 bis 12, wobei das weitere erste Gewinde einen grösseren Aussendurchmesser aufweist als das erste Gewinde.

14. Schraube nach einem der Ansprüche 10 bis 12, wobei das weitere erste Gewinde einen kleineren Aussendurchmesser aufweist als das erste Gewinde.

15. Konstruktion, aufweisend einen oder mehrere plattenförmige Gegenstände mit einer Gesamtdicke, und eine in den plattenförmigen Gegenstand gesetzte Schraube, wobei die Schraube nach einem der vorhergehenden Ansprüche ausgebildet ist, wobei der Abstandsabschnitt entlang der Setzrichtung eine Länge hat, die im Wesentlichen der Gesamtdicke entspricht, und wobei der oder die plattenförmigen Gegenstände an dem Abstandsabschnitt und insgesamt an dem Anschlag anliegen.
